# EUROPÄISCHE PATENTANMELDUNG

(11) **EP 1 798 923 A1**
(43) Veröffentlichungstag der Anmeldung: **20.06.2007**
(21) Anmeldenummer: 05027665.8
(22) Anmeldetag: 16.12.2005
(51) Int. Cl.: H04L 27/26, H04L 25/03, H04B 7/06

(54) **Verfahren zur Signalübertragung**

(71) Anmelder: SIEMENS AKTIENGESELLSCHAFT, 80333 München (DE)
(72) Erfinder: Eichinger, Josef Martin, 85464 Neufinsing (DE); Halfmann, Rüdiger, 67697 Otterberg (DE); Schulz, Egon, Dr., 80993 München (DE)

(57) **Zusammenfassung**

Die Erfindung betrifft ein Verfahren zur Signalübertragung in einem Funkkommunikationssystem, bei dem ein serieller Eingangsdatenstrom einem ersten und zumindest einem weiteren, zweiten Signalpfad zugeführt wird. Im ersten Signalpfad wird aus dem Eingangsdatenstrom ein erster Datenstrom gebildet, wobei durch eine erste Abbildungsfunktion jedem Bit bzw. jedem Symbol des Eingangsdatenstroms eine Position innerhalb des ersten Datenstroms zugeordnet wird. Im zweiten Signalpfad wird aus dem Eingangsdatenstrom ein zweiter Datenstrom gebildet wird, wobei durch eine zweite Abbildungsfunktion jedem Bit bzw. jedem Symbol des Eingangsdatenstroms eine Position innerhalb des zweiten Datenstroms zugeordnet wird. Für eine durchzuführende Funkübertragung wird der erste Datenstrom in ein erstes Signal und der zweite Datenstrom in ein zweites Signal umgewandelt. Für das erste Signal wird ein erster Kennwert und für das zweite Signal wird ein zweiter Kennwert gebildet, die miteinander verglichen werden. Anhand des Vergleichs wird entweder das erste oder das zweite Signal übertragen.

## Beschreibung

Die Erfindung betrifft ein Verfahren zur Signalübertragung in einem Funkkommunikationssystem.

Bei Mobilfunksystemen werden digitale Signale digital/analog gewandelt, in eine Trägerfrequenzlage umgesetzt und einem Sendeleistungsverstärker zugeführt. Das leistungsverstärkte HF-Signal wird dann einer Antenne oder einer Antennenanordnung zur Abstrahlung zugeführt.

Für derartige Leistungsverstärker bestehen hohe Anforderungen hinsichtlich ihrer linearen Verstärkerkennlinie und hinsichtlich einer Verstärkungsreserve, die zur Vermeidung von Verzerrungen bei einer Verstärkung eines hochfrequenten Sendesignals vorgehalten werden muss.

Die Anforderungen an verwendete Leistungsverstärker gewinnen für Systeme zunehmend an Bedeutung, bei denen zur Funkübertragung mehrere Träger bzw. Subträger verwendet werden. Zu diesen Systemen gehören beispielsweise die so genannten "OFDM"-Funkkommunikationssysteme.

Die verwendeten Träger bzw. Subträger überlagern sich am Ausgang des Sendeleistungsverstärkers, der einen vorgegebenen, so genannten "Peak-to-Average-Power-Ratio, PAPR"-Wert erfüllen muss. Der PAPR-Wert definiert ein Verhältnis zwischen Spitzenleistung einerseits und mittlerer Leistung andererseits.

Der einzuhaltende PAPR-Wert stellt hohe Anforderungen an den verwendeten Sendeleistungsverstärker. Dieser muss auch bei einem niedrigen Sendeleistungspegel zumeist außerhalb eines Sättigungsbereichs betrieben werden, um einen linearen Bereichs der Verstärkerkennlinie zu gewährleisten.

Um Kennlinien von Sendeleistungsverstärkern besser ausnutzen zu können, bzw. um vorzuhaltende Verstärkungsreserven zu minimieren, ist es bekannt, so genannte "Clipping"-Verfahren oder "Predistortion"-Verfahren zu verwenden. Diese Verfahren sind jedoch nur mit einem großen Aufwand an Schaltungstechnik und an Signalumformungen und Signalanalysen zu realisieren.

Es ist daher Aufgabe der vorliegenden Erfindung, ein Verfahren zur Signalübertragung in einem Funkkommunikationssystem anzugeben, das mit geringem Aufwand an Signalumformungen bzw. Schaltungstechnik sowie mit geringem Aufwand seitens eines verwendeten Sendeleistungsverstärkers durchführbar ist.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren wird ein serieller Eingangsdatenstrom einem ersten und zumindest einem weiteren, zweiten Signalpfad zugeführt. Im ersten Signalpfad wird aus dem Eingangsdatenstrom ein erster Datenstrom gebildet, wobei durch eine erste Abbildungsfunktion jedem Bit bzw. jedem Symbol des Eingangsdatenstroms eine Position innerhalb des ersten Datenstroms zugeordnet wird. Entsprechend wird im zweiten Signalpfad aus dem Eingangsdatenstrom ein zweiter Datenstrom gebildet, wobei durch eine zweite Abbildungsfunktion jedem Bit bzw. jedem Symbol des Eingangsdatenstroms eine Position innerhalb des zweiten Datenstroms zugeordnet wird.

Für eine durchzuführende Funkübertragung wird der erste Datenstrom in ein erstes Signal und der zweite Datenstrom in ein zweites Signal umgewandelt, für das erste Signal wird ein erster Kennwert und für das zweite Signal wird ein zweiter Kennwert gebildet. Diese beiden Kennwerte werden miteinander verglichen. Anhand des Vergleichs wird dann entweder das erste oder das zweite Signal übertragen.

Durch die erste bzw. zweite Abbildungsfunktionen erfolgt also eine Umordnung bzw. eine Umsortierung von Bits oder Symbolen des zugeführten Eingangsdatenstroms. Die Abbildungsfunktionen werden auch als "Mapping-Funktionen, MF" bezeichnet.

Werden als Kennwerte für das erste und für das zweite Signal PAPR-Werte bestimmt, so wird in einer bevorzugten Ausführungsform nur der Datenstrom bzw. das Signal über einen Sendeleistungsverstärker mit dem zugeordneten minimalen PAPR-Wert übertragen.

Durch das erfindungsgemäße Verfahren werden vorzuhaltende Leistungsreserven des verwendeten Sendeleistungsverstärkers minimiert.
Dadurch ist es möglich, auch preisgünstigere Leistungsverstärker als Sendeleistungsverstärker zu verwenden.

Nachfolgend wird die Erfindung anhand einer Zeichnung näher erläutert. Dabei zeigt:
- FIG 1: ein erstes prinzipielles Blockschaltbild des erfindungsgemäßen Verfahrens,
- FIG 2: ein zweites prinzipielles Blockschaltbild des erfindungsgemäßen Verfahrens für ein MIMO-Funkkommunikationssystem, und
- FIG 3: eine "Butterfly-Operation" einer FFT- oder IFFT, die beim erfindungsgemäßen Verfahren verwendet wird.

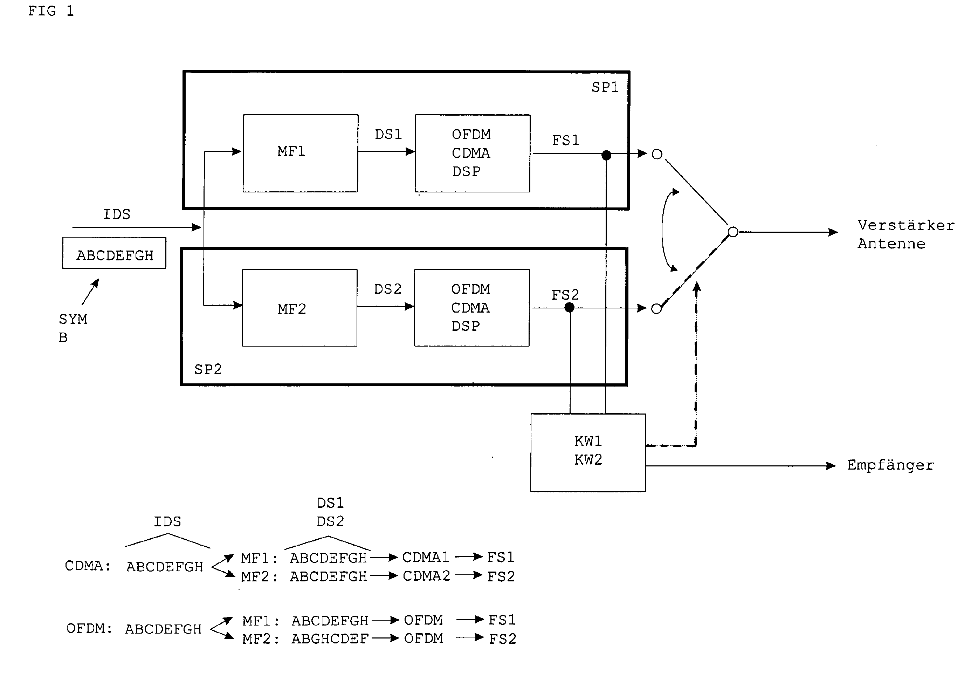

FIG 1 zeigt ein erstes prinzipielles Blockschaltbild des erfindungsgemäßen Verfahrens.

Ein serieller Eingangsdatenstrom IDS wird einem ersten Signalpfad SP1 und gleichzeitig zumindest einem weiteren, zweiten Signalpfad SP2 zugeführt.

Im ersten Signalpfad SP1 wird aus dem Eingangsdatenstrom IDS ein erster Datenstrom DS1 gebildet. Dem ersten Signalpfad SP1 ist dabei eine erste Abbildungsfunktion MF1 zugeordnet, die jedem Bit B bzw. jedem Symbol SYM des Eingangsdatenstroms IDS eine Position innerhalb des ersten Datenstroms DS1 zuordnet.

Entsprechend wird im zweiten Signalpfad SP2 aus dem Eingangsdatenstrom IDS ein zweiter Datenstrom DS2 gebildet, wobei durch eine zweite Abbildungsfunktion MF2 jedem Bit B bzw. jedem Symbol SYM des Eingangsdatenstroms IDS eine Position innerhalb des zweiten Datenstroms DS2 zugeordnet wird.

Für eine durchzuführende Funkübertragung wird der erste Datenstrom DS in ein erstes Funksignal FS1 und der zweite Datenstrom DS2 in ein zweites Funksignal FS2 umgewandelt.

Hier wird beispielhaft für beide Signalpfade SP1 und SP2 eine Funksignalumwandlung für eine OFDM-Multicarrier-Funkübertragung bzw. für eine CDMA-Funkübertragung gezeigt.

Für das erste Funksignal FS1 des ersten Signalpfads SP1 wird ein erster Kennwert KW1 gebildet, während für das zweite Funksignal FS2 des zweiten Signalpfads SP2 ein zweiter Kennwert KW2 gebildet wird.

Die beiden Kennwerte KW1 und KW2 werden miteinander verglichen und anhand des Vergleichs wird entweder das erste Funksignal FS1 oder das zweite Funksignal FS2 über einen Sendeleistungsverstärker und eine nachfolgende Antenne übertragen.

Um empfängerseitig eine erfolgreiche Dekodierung zu ermöglichen, wird diejenige Abbildungsfunktion MF1 oder MF2, die dem übertragenen Funksignal FS1 oder FS2 zuordenbar ist, an den Empfänger übertragen.

Alternativ dazu ist es möglich, anstelle der Abbildungsfunktion MF1 oder MF2, die dem übertragenen Funksignal FS1 oder FS2 zuordenbar ist, eine Information oder einen Indikator zu übertragen, der dann die sendeseitig gewählte Abbildungsfunktion MF1 oder MF2 repräsentiert bzw. kennzeichnet.

Vorteilhafterweise werden als Kennwerte KW1 und KW2 die jeweiligen PAPR-Werte der Funksignale FS1 bzw. FS2 verwendet. Dann wird das Funksignal FS1 oder FS2 über den Sendeleistungsverstärker und die Antenne zur Abstrahlung gebracht, dessen zugeordneter PAPR-Kennwert minimal ist.

Nachfolgend wird das erfindungsgemäße Verfahren bei einer CDMA-Funkübertragung näher beschrieben.

In einer ersten Ausgestaltungsform wird dem ersten Signalpfad SP1 ein erster Spreizcode CDMA1 zugeordnet, während dem zweiten Signalpfad SP2 ein zweiter Spreizcode CDMA2 zugeordnet wird, der sich vom ersten Spreizcode CDMA1 unterscheidet.

Dabei werden zueinander identische Abbildungsfunktionen MF1 und MF2 verwendet, d.h. die erste Abbildungsfunktion MF1 entspricht der zweiten Abbildungsfunktion MF2. Damit bildet der Eingangsdatenstrom IDS durch die beiden Abbildungsfunktionen MF1 und MF2 unverändert den ersten bzw. den zweiter Datenstrom DS1 und DS2.

Bei einer CDMA-Funkübertragung ist der PAPR-Wert, der hier beispielhaft als Kennwert verwendet werden soll, sowohl von den gewählten Spreizcodes CDMA1 und CDMA2 als auch von den Daten abhängig, die auf den beiden Spreicodes CDMA1 und CDMA2 "gemappt" bzw. abgebildet werden.

Somit werden über die PAPR-Werte die beiden unterschiedlichen Codevarianten CDMA1 und CDMA2 getestet. Vorteilhafterweise wird für eine aufwandsarme Realisierung bei der Spreizung mit den alternativen CDMA-Codes ein möglichst hoher 'Reuse' mit bereits vorher ermittelten Ergebnissen ermittelt.

Beispielsweise wird ein CDMA-Code A als erster CDMA-Code CDMA1 aus den Subcodes a und b gemäß der Regel "a b b a" generiert und wird ein CDMA-Code B als zweiter CDMA-Code CDMA2 aus den Subcodes a und b gemäß der Regel "a b a b" generiert, so ist der erste Teil der Codesequenz für die Codes A und B identisch und muss lediglich einmal berechnet werden. Diese Realisierung erfolgt somit über die Modulation.

Alternativ dazu ist es in einer zweiten, hier nicht gezeigten Ausgestaltungsform auch möglich, abzubildende Eingangsdaten des jeweiligen Codes zu tauschen, wodurch eine Realisierung über das "Mapping" erfolgt. In diesem Fall werden zur Bildung des ersten und des zweiten Funksignals FS1, FS2 identische CDMA-Codes CDMA verwendet.

In einer dritten, hier nicht gezeigten Ausgestaltungsform ist es auch möglich, bei der Bildung des ersten Funksignals FS1 eine erste Anzahl an CDMA-Codes und bei der Bildung des zweiten Funksignal FS2 eine zweite Anzahl an CDMA-Codes zu verwenden, wobei sich dann die erste und die zweite CDMA-Code-Anzahl voneinander unterscheiden.

In einer vierten, hier nicht gezeigten Ausgestaltungsform ist es auch möglich, bei der Bildung des ersten und des zweiten Funksignals FS1, FS2 jeweils eine gleiche Anzahl an CDMA-Codes zu verwenden, wobei sich dann die CDMA-Codes des ersten Funksignals FS1 und die CDMA-Codes des zweiten Funksignals FS2 in zumindest einem CDMA-Code voneinander unterscheiden.

Vorteilhafterweise werden bei der dritten und bei der vierten Ausgestaltungsform identische Mapping- bzw. Abbildungsfunktionen MF1 und MF2 verwendet.

Für die jeweiligen Funksignale werden PAPR-Werte als Kennwerte gebildet und miteinander verglichen.

Empfängerseitig wird das übertragene Signal empfangen und mit jedem CDMA-Code entschlüsselt - unter der Voraussetzung, dass sendeseitig verwendbare CDMA-Codes empfangsseitig vorbekannt sind.

Alternativ dazu ist es möglich, bei der Übertragung verwendete CDMA-Codes, die dem übertragenen Signal zuordenbar sind, empfangsseitig anhand von Wahrscheinlichkeitsberechnungen bei der Entschlüsselung zu ermitteln.

Nachfolgend wird das erfindungsgemäße Verfahren bei einer OFDM-Funkübertragung näher beschrieben.

Hier werden jeweils unterschiedliche Abbildungsfunktionen MF1 und MF2 verwendet, wobei vorteilhafterweise im ersten Signalpfad SP1 der Eingangsdatenstrom IDS unverändert als erster Datenstrom DS1 verwendet wird. Im zweiten Signalpfad SP2 hingegen werden die Positionen der Symbole SYM bzw. Bits B des Eingangsdatenstroms IDS zur Bildung des zweiten Datenstroms DS2 verändert.

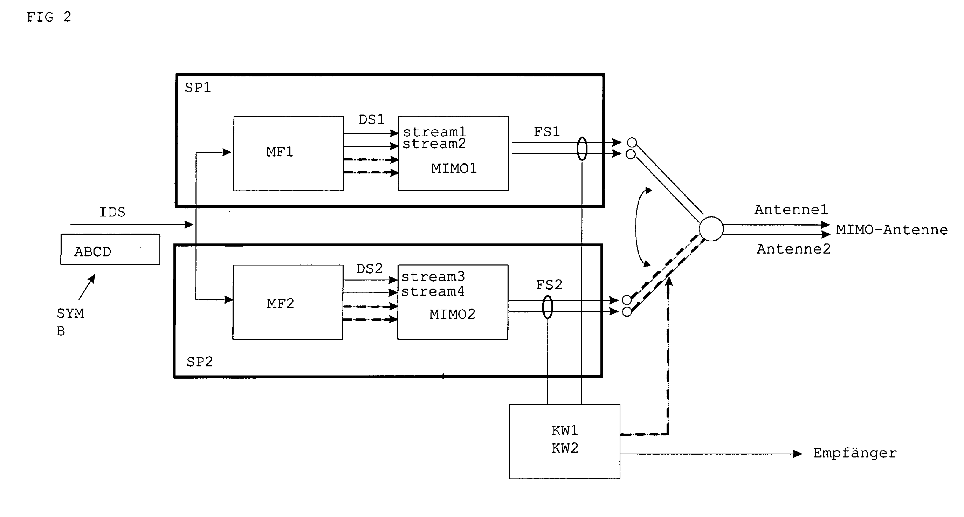

FIG 2 zeigt ein zweites prinzipielles Blockschaltbild des erfindungsgemäßen Verfahrens für ein MIMO-Funkkommunikationssystem.

Ein serieller Eingangsdatenstrom IDS wird einem ersten Signalpfad SP1 und gleichzeitig zumindest einem weiteren, zweiten Signalpfad SP2 zugeführt.

Im ersten Signalpfad SP1 wird aus dem Eingangsdatenstrom IDS ein erster Datenstrom DS1 für eine erste MIMO-Konfigurationen MIMO1 gebildet. Dazu ist dem ersten Signalpfad SP1 eine erste Abbildungsfunktion MF1 zugeordnet, die jedem Bit B bzw. jedem Symbol SYM des Eingangsdatenstroms IDS eine Position innerhalb des ersten Datenstroms DS1 zuordnet.

Entsprechend wird im zweiten Signalpfad SP2 aus dem Eingangsdatenstrom IDS ein zweiter Datenstrom DS2 für eine zweite MIMO-Konfigurationen MIM02 gebildet. Dazu ist dem zweiten Signalpfad SP2 eine zweite Abbildungsfunktion MF2 zugeordnet, die jedem Bit B bzw. jedem Symbol SYM des Eingangsdatenstroms IDS eine Position innerhalb des zweiten Datenstroms DS2 zuordnet.

Für eine durchzuführende Funkübertragung wird der erste Datenstrom DS1 unter Verwendung der ersten MIMO-Konfiguration MIMO1 in ein erstes Funksignal FS1 umgewandelt, während der zweite Datenstrom DS2 unter Verwendung der zweiten MIMO-Konfiguration MIMO2 in ein zweites Funksignal FS2 umgewandelt wird.

Für das erste Funksignal FS1 des ersten Signalpfads SP1 wird beispielhaft ein PAPR-Wert als erster Kennwert KW1 gebildet, während für das zweite Funksignal FS2 des zweiten Signalpfads SP2 ein weiterer PAPR-Wert als zweiter Kennwert KW2 gebildet wird.

Die beiden Kennwerte KW1 und KW2 werden miteinander verglichen und anhand des Vergleichs wird entweder das erste Funksignal FS1 oder das zweite Funksignal FS2 über einen Sendeleistungsverstärker und eine nachfolgende MIMO-Antennenanordnung übertragen.

Um empfängerseitig eine erfolgreiche Dekodierung zu ermöglichen, wird diejenige Abbildungsfunktion MF1 oder MF2, die dem übertragenen Funksignal FS1 oder FS2 zuordenbar ist, an den Empfänger übertragen.

Alternativ dazu ist es möglich, anstelle der Abbildungsfunktion MF1 oder MF2, die dem übertragenen Funksignal FS1 oder FS2 zuordenbar ist, eine Information oder einen Indikator zu übertragen, der dann die sendeseitig gewählte Abbildungsfunktion MF1 oder MF2 repräsentiert bzw. kennzeichnet.

In einer ersten Ausgestaltungsform unterscheidet sich die dem ersten Signalpfad SP1 zugeordnete erste MIMO-Konfiguration MIMO1 von der zweiten MIMO-Konfiguration MIM02, die dem zweiten Signalpfad SP2 zugeordnet ist.

Vorteilhafterweise werden zueinander identische Abbildungsfunktionen MF1 und MF2 verwendet, d.h. die erste Abbildungsfunktion MF1 entspricht der zweiten Abbildungsfunktion MF2.

Damit bildet der Eingangsdatenstrom IDS durch die beiden Abbildungsfunktionen MF1 und MF2 unverändert den ersten bzw. den zweiter Datenstrom DS1 und DS2.

Bei einer MIMO-Funkübertragung ist der PAPR-Wert, der hier beispielhaft als Kennwert verwendet werden soll, sowohl von den gewählten MIMO-Konfigurationen MIMO1 und MIMO2 als auch von den Daten abhängig, die auf die beiden MIMO-Konfigurationen MIMO1 und MIMO2 "gemappt" bzw. abgebildet werden.

Somit werden über die PAPR-Werte die beiden unterschiedlichen MIMO-Konfigurationen MIMO1 und MIMO2 getestet.

Für den Fall, dass unterschiedliche Abbildungsfunktionen MF1 und MF2 verwendet werden, ist folgende aufwandsarme Vorgehensweise besonders vorteilhaft:

Daten oder Symbolsequenzen "A", "B", "C" und "D" werden durch die erste Abbildungsfunktion MF1 in zwei parallele Teildatenströme "stream" des ersten Datenstroms DS1 umgesetzt. Dabei werden die Daten "A" und "B" einem ersten Teildatenstrom stream1 derart zugeordnet, dass dieser die Datenkombination "B A" aufweist. Die Daten "C" und "D" werden einem zweiten Teildatenstrom stream2 derart zugeordnet, dass dieser die Datenkombination "D C" aufweist.

Weiter werden die Daten "A", "B", "C" und "D" durch die zweite Abbildungsfunktion MF2 in zwei weitere parallele Teildatenströme "stream" des zweiten Datenstroms DS2 umgesetzt. Dabei werden die Daten "A" und "C" einem dritten Teildatenstrom stream3 derart zugeordnet, dass dieser die Datenkombination "C A" aufweist. Die Daten "B" und "D" werden einem vierten Teildatenstrom stream4 derart zugeordnet, dass dieser die Datenkombination "D B" aufweist.

Damit bleiben die Daten "A" und "D" auf ihren ursprünglichen Plätzen bzw. Positionen, wodurch sich eine identische Rechenvorschrift ergibt.

Empfängerseitig wird das übertragene Signal mit jeder MIMO-Konfiguration MIMO1, MIMO2, entschlüsselt - unter der Voraussetzung, dass die sendeseitig verwendbaren MIMO-Konfigurationen MIMO1, MIMO2 empfangsseitig vorbekannt sind.

Die jeweilige Abbildungsfunktion MF1, MF2 wird wiederum in einer bevorzugten Ausgestaltung an den Empfänger übertragen.

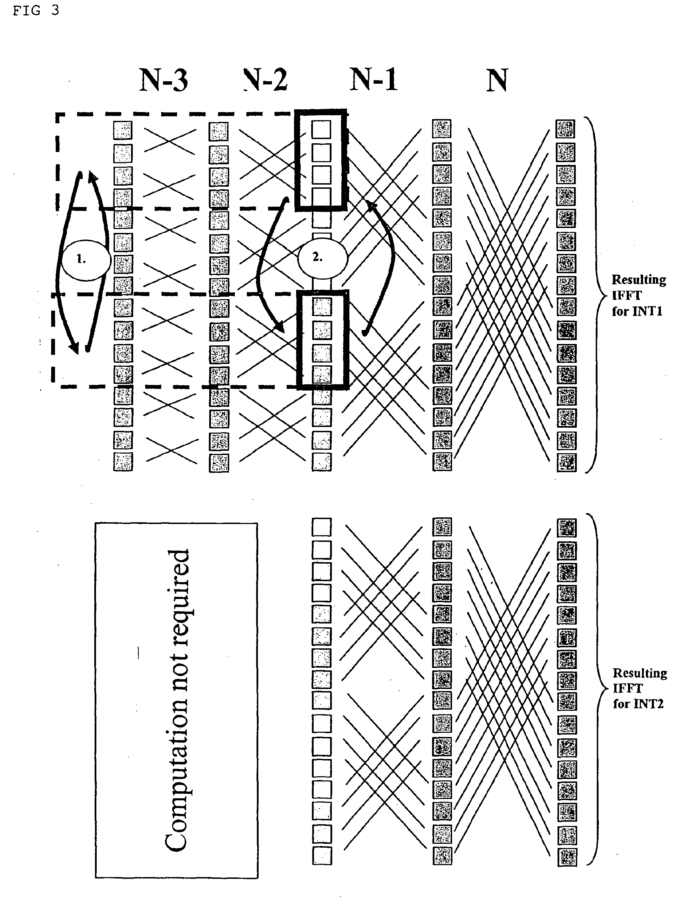

FIG 3 zeigt eine "Butterfly-Operation" einer "Fast Fourier Transformation, FFT" oder einer "Inversen Fast Fourier Transformation, IFFT", zur Verwendung beim erfindungsgemäßen Verfahren.

Dabei werden über Variationen der Abbildungs- bzw. Mapping-funktionen einer Bitfolge zunächst mehrere Signale zugeordnet. Anhand eines Kriteriums erfolgt dann eine Auswahl. Eine ausgewählte Variante wird dann an einen Empfänger übermittelt oder dort über eine so genannte "blind detection" vom Empfänger selbst ermittelt. Dabei wird der Aufwand zur senderseitigen Berechnung der Varianten reduziert.

Grundbaustein der gezeigten "Fast Fourier Transformation, FFT" ist ein so genannter "Butterfly"-Operator, der zwei Werte über Kreuz miteinander verknüpft. Bei einer "Digitalen Fourier Transformation, DFT" von zwei Werten wird diese Operation genau einmal durchgeführt. Bei vier Werten werden entsprechend 2*2 Operationen benötigt, bei acht Werten werden 4*3 Operationen durchgeführt.

FIG 3 zeigt somit entsprechende Butterfly-Operationen für vier Werte.

Werden jeweils zwei Eingangswerte in einer ersten Stufe (N-3) über Kreuz zwei Ausgangswerten einer zweiten Stufe (N-2) zugeordnet und erfolgt diese Zuordnung in weiteren Stufen (N-1) und (N), dann werden weitere Berechnungen in den Stufen (N-3) und (N-2) nicht benötigt.

Es ergeben sich dann die gezeigten vier Stufen (N-3) bis (N) zu jeweils acht Butterfly-Operationen.

Tauscht man in der zweiten Stufe (N-3) wie gezeigt Eingangswerte blockweise aus, wird ein identisches Ergebnis zum Austausch der Zwischenergebnisse in der Stufe (N-2) und (N-1) errechnet.

Damit kann für die Ermittlung der FFT-Ausgangswerte bzw. der IFFT-Ausgangswerte einer Mapping- bzw. Abbildungsfunktion auf die ersten beiden Stufen (N-3) und (N-2) verzichtet werden.

Dies ist im unteren Bildteil der FIG 3 durch den gezeigten Rahmen bzw. Kasten angedeutet.

## Patentansprüche

1. Verfahren zur Signalübertragung in einem Funkkommunikationssystem,
- bei dem ein serieller Eingangsdatenstrom einem ersten und zumindest einem weiteren, zweiten Signalpfad zugeführt wird,
- bei dem im ersten Signalpfad aus dem Eingangsdatenstrom ein erster Datenstrom gebildet wird, wobei durch eine erste Abbildungsfunktion jedem Bit bzw. jedem Symbol des Eingangsdatenstroms eine Position innerhalb des ersten Datenstroms zugeordnet wird,
- bei dem im zweiten Signalpfad aus dem Eingangsdatenstrom ein zweiter Datenstrom gebildet wird, wobei durch eine zweite Abbildungsfunktion jedem Bit bzw. jedem Symbol des Eingangsdatenstroms eine Position innerhalb des zweiten Datenstroms zugeordnet wird,
- bei dem für eine durchzuführende Funkübertragung der erste Datenstrom in ein erstes Signal und der zweite Datenstrom in ein zweites Signal umgewandelt wird,
- bei dem für das erste Signal ein erster Kennwert und für das zweite Signal ein zweiter Kennwert gebildet wird, die miteinander verglichen werden,
- bei dem anhand des Vergleichs entweder das erste oder das zweite Signal übertragen wird.

2. Verfahren nach Anspruch 1,
- bei dem für die durchzuführende Funkübertragung der erste Datenstrom in ein erstes Funksignal umgewandelt wird, so dass das erste Funksignal das erste Signal bildet, und
- bei dem für die durchzuführende Funkübertragung der zweite Datenstrom in ein zweites Funksignal umgewandelt wird, so dass das zweite Funksignal das zweite Signal bildet.

3. Verfahren nach Anspruch 2, bei dem für eine CDMA-Funkübertragung
- der erste Datenstrom mit zumindest einem CDMA-Code verschlüsselt in das erste Funksignal umgewandelt wird, und
- bei dem der zweite Datenstrom mit zumindest einem CDMA-Code verschlüsselt in das zweite Funksignal umgewandelt wird.

4. Verfahren nach Anspruch 3,
- bei dem zur Bildung des ersten und des zweiten Funksignals identische CDMA-Codes verwendet werden, oder
- bei dem bei der Bildung des ersten Funksignals eine erste Anzahl an CDMA-Codes und bei der Bildung des zweiten Funksignal eine zweite Anzahl an CDMA-Codes verwendet werden, wobei sich die erste und die zweite CDMA-Code-Anzahl unterscheiden, oder
- bei dem bei der Bildung des ersten und des zweiten Funksignals jeweils eine gleiche Anzahl an CDMA-Codes verwendet werden, wobei sich die CDMA-Codes des ersten Funksignals und die CDMA-Codes des zweiten Funksignals in zumindest einem CDMA-Code unterscheiden.

5. Verfahren nach Anspruch 3 oder 4,
- bei dem seitens eines Empfängers das übertragene Signal empfangen und mit jedem CDMA-Code entschlüsselt wird, wobei sendeseitig verwendbare CDMA-Codes empfangsseitig vorbekannt sind, oder
- bei dem jeweils verwendete CDMA-Codes, die dem übertragenen Signal zuordenbar sind, empfangsseitig anhand von Wahrscheinlichkeitsberechnungen bei der Entschlüsselung ermittelt werden.

6. Verfahren nach Anspruch 2, bei dem bei unterschiedlicher erster und zweiter Abbildungsfunktion der erste Datenstrom in ein erstes Mehrträger-Funksignal und der zweite Datenstrom in ein zweites Mehrträger-Funksignal umgewandelt werden.

7. Verfahren nach Anspruch 6,
- bei dem bei der Bildung des ersten und des zweiten Funksignals identische Subträger verwendet werden, oder
- bei dem bei der Bildung des ersten Funksignals eine erste Anzahl an Subträgern und bei der Bildung des zweiten Funksignal eine zweite Anzahl an Subträgern verwendet werden, wobei sich die erste und die zweite Subträger-Anzahl unterscheiden, oder
- bei dem bei der Bildung des ersten und des zweiten Funksignals jeweils eine gleiche Anzahl an Subträgern verwendet werden, wobei sich die Subträger des ersten Funksignals und die Subträger des zweiten Funksignals in zumindest einem Subträger unterscheiden.

8. Verfahren nach Anspruch 6 oder 7, bei dem als Mehrträger-Funksignal ein OFDM- oder ein OFDM/A-Funksignal verwendet wird.

9. Verfahren nach einem der vorhergehenden Ansprüche,
- bei dem der erste Datenstrom in ein digitales oder analoges erstes Signal umgeformt wird, und
- bei dem der zweite Datenstrom in ein digitales oder in ein analoges zweites Signal umgeformt wird.

10. Verfahren nach einem der vorhergehenden Ansprüche, bei dem das erste und das zweite Signal im Basisband-Bereich oder im Zwischenfrequenz-Bereich oder im Trägerfrequenzbereich gebildet werden.

11. Verfahren nach Anspruch 10,
- bei dem bei einer Bildung des ersten und des zweiten Signals im Basisband-Bereich für das erste Signal ein "Peak-to-Average-Power-Ratio"-Wert als Kennwert des ersten Signals und für das zweite Signal ein "Peak-to-Average-Power-Ratio"-Wert als Kennwert des zweiten Signals gebildet wird, und
- bei dem das Signal mit zugeordnetem minimalen Kennwert übertragen wird.

12. Verfahren nach einem der vorhergehenden Ansprüche,
- bei dem diejenige Abbildungsfunktion, die dem übertragenen Signal zugeordnet ist, an einen Empfänger übermittelt wird, oder
- bei dem anstelle der zugeordneten Abbildungsfunktion des übertragenen Signals ein Indikator übermittelt wird, der die zugeordnete Abbildungsfunktion kennzeichnet.

13. Sender für eine Signalübertragung in einem Funkkommunikationssystem, der Mittel beinhaltet, die zur Durchführung der Verfahrensschritte nach einem der Ansprüche 1 bis 12 ausgebildet sind.

14. Empfänger für eine Signalübertragung in einem Funkkommunikationssystem, der Mittel beinhaltet, die zum Empfang eines nach den Verfahrensschritten der Ansprüche 1 bis 12 übertragenen Signals bzw. Funksignals ausgebildet sind.
